# EUROPEAN PATENT SPECIFICATION

(11) **EP 2 042 292 B1**
(45) Date of publication and mention of the grant of the patent: **05.01.2011**
(21) Application number: 07253865.5
(22) Date of filing: 28.09.2007
(51) Int. Cl.: B29C 49/00, B32B 27/32, C08J 5/18, C08L 23/08

(54) **Composition**
Zusammensetzung
Composition

(43) Date of publication of application: 01.04.2009
(73) Proprietor: Borealis Technology Oy, 06101 Porvoo (FI)
(72) Inventor: Kvamme, Lars Inge, 3970 Langesund (NO)
(74) Representative: Campbell, Neil Boyd

(56) References cited:
- EP-A- 0 735 090
- WO-A-2005/002744
- US-A1- 2005 222 338
- US-B1- 6 492 010

## Description

This invention relates to a polymer composition in the form of pellets suitable for the manufacture of films with excellent balance of optical and mechanical properties and excellent processability. The pellets can be used to form monolayer films or a single layer in a multilayer film, e.g. a cast film or blown film. The use of the films of the invention in applications from shopping bags to heavy duty shipping sacks is also disclosed. In particular, the invention concerns a blend of multimodal polyethylene, e.g. bimodal linear low density polyethylene (LLDPE), a metallocene produced LLDPE and low density polyethylene (LDPE) which is preferably used to form monolayer films.

Many polymer films contain multiple layers as the use of coextrusion to form films becomes more widespread. Multilayer films can therefore contain different layers providing different properties to the final film. Coextrusion to form multilayer films is however more costly than simply forming a monolayer film so for applications where film volumes are high, monolayer films are still attractive commercial products.

Monolayer films are thus still a valuable commercial product as such films are still used in the manufacture of many materials, in particular packaging films such as shipping sacks, carrier bags and freezer bags.

All film manufacturers, whether making multilayer or monolayer films are looking to maximise the properties of the film it produces. Maximisation of properties is perhaps easier with multilayer films as each layer can be tailored to provide a particular attribute of need. It is common for example to use an outer layer which can give rise to good sealing properties whilst a core layer might be used to provide mechanical strength to a film. Moreover, when using a multilayer construction, incompatibility between film components can be avoided by placing these in separate layers.

When a film is monolayered however, the options available to the film manufacturer are much more limited. It is currently very difficult to prepare monolayer films having optimal properties, e.g. good mechanical and processing properties and the person skilled in the art is therefore looking for new films which can provide improvements to these. Especially problematic are optical properties as the more components used in a monolayer film, the higher the haze value of the film tends to be.

The problem faced by the film manufacturer is that by trying to improving one property, another equally important property tends to be detrimentally affected. There are also real problems of compatibility between different polymers in a monolayer construction where all components are extruded together as a blend. If polymer components are not compatible, inhomogeneity is evident in the formed film which is unacceptable for the manufacturer and consumer. This limits still further the parameters which the film chemist can manipulate.

For example, LDPE rich blends are known to give excellent processability and good optical properties but suffer from poor sealing properties, poor draw down and poor mechanical properties.

Single site produced LLDPE's are thus traditionally used with LDPE to improve the mechanical properties of the blend but these cannot be added in sufficiently high amounts to improve mechanical properties without causing film blowing problems. Monolayer films are blown using narrow die gaps and because the blend of LDPE and single site LLDPE suffers from poor bubble stability as the content of single site LLDPE increases, blowing such blends is difficult. There are also real issues with melt fracture with LDPE/single site LLDPE blends.

To try to improve mechanical (i.e. tensile) properties therefore, the skilled man has considered the addition of high density or medium density polyethylene to such a blend. Again, however, to effect the necessary stiffness improvement requires so much HDPE/MDPE that optical properties and impact properties of any film are seriously affected.

Various solutions have been put forward in the art to provide solutions to the above problem. In EP-A-735090, a resin composition for a heavy duty packaging bag is described which is formed from a blend of a single site LLDPE, an MDPE/HDPE and an LDPE. As noted above however, the addition of high density or medium density polyethylene to such a blend in the necessary amount to cause stiffness improvement drastically reduces optical properties and impact properties of any film.

WO03/064519 describes blending a multimodal medium density polyethylene with linear low density polyethylene to allow formation of an oriented film which exhibit good modulus, high gloss, low haze and good dart drop properties. These oriented films are not however, ideal for heavy duty packaging applications as the orientation thereof reduces mechanical strength especially in the machine direction

WO01/98406 describes very low density polyethylene blends which contain LLDPE and a very low density polyethylene. Films made therefrom allegedly have good dart impact and puncture properties.

EP-A-1225201 describes blends of metallocene produced medium density polyethylene and LDPE to produce blown films. These are highly shrinkable in both machine and transverse directions but are generally multilayer.

Thus, whilst many combinations of polymers have been suggested for the manufacture of advantageous films, none have so far proposed the solution offered by the present invention which gives rise to films having an excellent balance of mechanical, optical and processing properties.

The present inventors have surprisingly found that a monolayer films or a layer within a multilayer film can be formed from pellets by simple in line addition of those pellets to an extruder where the pellets are a blend of an single site produced LLDPE component (from hereon on an mLLDPE), an LDPE component and a multimodal LLDPE component. Films formed thereby have an ideal balance of properties, in particular good optical properties, good impact and toughness and excellent sealing properties. The fact that low haze films can be manufactured from a three component blend is especially surprising.

Thus, viewed from one aspect, the invention provides a polymer composition in the form of pellets comprising:
(A) 10 to 90 wt% of an mLLDPE polymer having a density of less than 940 kg/m³;
(B) 10 to 90 wt % of a multimodal LLDPE polymer having a density of less than 940 kg/m³;
(C) 1 to 50 wt% of a LDPE polymer.

Viewed from another aspect the invention provides a monolayer film comprising:
(A) 10 to 90 wt% of an mLLDPE polymer having a density of less than 940 kg/m³;
(B) 10 to 90 wt % of a multimodal LLDPE polymer having a density of less than 940 kg/m³; and
(C) 1 to 50 wt% of a LDPE polymer.

Viewed from another aspect the invention provides a multilayer film in which at least one layer thereof comprises:
(A) 10 to 90 wt% of an mLLDPE polymer having a density of less than 940 kg/m³;
(B) 10 to 90 wt % of a multimodal LLDPE polymer having a density of less than 940 kg/m³; and
(C) 1 to 50 wt% of a LDPE polymer.

Viewed from another aspect the invention provides a process for the preparation of a film comprising extruding and then blowing a composition as hereinbefore defined into a film.

The cast film process involves the extrusion of polymers melted through a slot or flat die to form a thin, molten sheet or film. This film is "pinned" to the surface of a chill roll (typically water-cooled and chrome-plated) by a blast of air from an air knife or vacuum box. The film quenches immediately and then has its edges slit prior to winding.

Viewed from another aspect the invention provides use of a film as hereinbefore described in packaging as well as an article packaged using said film.

The composition of the invention is preferably in the form of pellets. By pellets is meant particles of about 50 µm to 8 mm in size, preferably 0.5 to 6 mm, especially 1 to 4 mm in size. Pellets are obtained by conventional cutting and pelletising techniques and are employed in this invention because they can be added directly to an extruder. Pellets are distinguished from polymer powders where particle sizes are less than 50 µm.

To prepare the composition of the invention, the three components thereof can simply be mixed in any suitable vessel, e.g. in the extruder itself. It is preferred if all the components of the blend are in pellet form themselves when they are mixed.

The use of pellets ensures that the composition of the invention is capable of being converted in a film, e.g. monolayer film, by the simple in line addition of the pellets to an extruder. As noted above therefore, the composition of the invention can be added to the extruder in a preblended form or the separate components can be added to the extruder to cause formation of the blend of the invention in the extruder prior to film formation.

For film formation using a polymer mixture it is important that the different polymer components be intimately mixed prior to extrusion and casting/blowing of the film as otherwise there is a risk of inhomogeneities, e.g. gels, appearing in the film. Thus, it is especially preferred to thoroughly blend the components, for example using a twin screw extruder, preferably a counter-rotating extruder, prior to extrusion and film blowing. Sufficient homogeneity can also be obtained by selecting the screw design for the film extruder such that it is designed for good mixing and homogenising.

The composition of the invention contains two LLDPE components, a single site produced component (an mLLDPE) and a multimodal LLDPE component.

Both LLDPE components however preferably have a density of less than 940 kg/m³, preferably less than 935 kg/m³, e.g. 905-939 kg/m³, preferably in the range of from 915 to 934 kg/m³, such as 918 to 934 kg/m³, e.g. 920 to 930 kg/m³ (ISO 1183).

### Properties of the mLLDPE

The mLLDPE component is one which is manufactured using a single site catalyst, preferably a metallocene catalyst. The use of metallocene catalysis to make LLDPE's is known and widely described in the literature. Metallocenes of use in the manufacture of mLLPDE's could be those described below in connection with the multimodal LLDPE component.

Preferably, the mLLDPE component is unimodal. By unimodal is meant that the molecular weight profile of the polymer comprises a single peak and is produced by one reactor and a single catalyst.

The mLLDPE is formed from ethylene along with at least one C₃₋₁₂ alpha-olefin comonomer, e.g. 1-butene, 1-hexene or 1-octene. Preferably, the mLLDPE is a binary copolymer, i.e. the polymer contains ethylene and one comonomer, or it is a terpolymer, i.e. the polymer contains ethylene and two comonomers. Preferably, the mLLDPE comprises an ethylene hexene copolymer, ethylene octene copolymer or ethylene butene copolymer. The amount of comonomer present in the mLLDPE is preferably 0.5 to 12 mol%, e.g. 2 to 10% mole, especially 4 to 8% mole. Alternatively viewed comonomer contents present in the mLLDPE may be 1.5 to 10 wt%, especially 2 to 8 wt%.

The MFR₂ (melt flow rate ISO 1133 at 190°C under a load of 2.16 kg) of mLLDPE's of use in the composition of the invention should preferably be in the range 0.01 to 20 g/10min, e.g. 0.5 to 10, preferably 0.8 to 6.0, e.g. 0.9 to 2.0 g/10min.

The mLLDPE should preferably have a weight average molecular weight (Mw) of 100,000-250,000, e.g. 110,000-160,000 (GPC).

The Mw/Mn value should preferably be 2 to 20, e.g. 2.5 to 4, especially 3.0 to 3.5 (GPC).

Suitable mLLDPE's are available commercially from Borealis and other suppliers.

Unimodal LLDPE is preferably prepared using a single stage polymerisation, preferably a slurry polymerisation in slurry tank or loop reactor in a manner well known in the art. Preferably the unimodal mLLDPE is produced in a loop reactor. For the general principles reference is made below to the polymerisation of the low molecular weight component of a multimodal LLDPE in a multistage process with the exception that the process conditions (e.g. hydrogen and comonomer feed) are adjusted to provide the properties of the final polymer.

It is also within the scope of the invention for the mLLDPE component to be multimodal. In this embodiment, the mLLDPE will possess the features described below in connection with the multimodal LLDPE component. By definition however, the mLLDPE component, even if multimodal, is still produced using a single site, preferably metallocene catalysis. It will, of course, be the case that if the mLLDPE component is multimodal, it will differ from the multimodal LLDPE component.

If the mLLDPE component is multimodal, it is especially preferred if the multimodal LLDPE component is made by Ziegler-Natta catalysis.

### Properties of the LDPE Component

The composition of the invention also contains an LDPE component. LDPE is a prepared using a well-known high pressure radical process as will be known to the skilled man and is a different polymer from an LLDPE.

The LDPE may have a density of 915-935 kg/m³, especially 920-930 kg/m³, e.g. 922 to 930 kg/m³. The MFR₂ of the LDPE may range from 0.3 to 4 g/10min, e.g. 0.5 to 2.5 g/10 min, e.g. 1.0 to 2.0 g/10 min. Suitable LDPE's are available commercially from Borealis and other suppliers.

### Properties of the Multimodal LLDPE Component

The composition of the invention also comprises a multimodal LLDPE component. As noted above, the multimodal LLDPE should have a density of less than 940 kg/m³, preferably less than 935 kg/m³, e.g. 905-939 kg/m³, preferably in the range of from 915 to 934 kg/m³, such as 918 to 934 kg/m³, e.g. 920 to 930 kg/m³ (ISO 1183).

The MFR₂ of the multimodal LLDPE is preferably be in the range 0.01 to 20 g/10min, preferably 0.05 to 15 g/10min, e.g. 0.1-10 g/10min, especially 0.8 to 6.0, e.g. 0.9 to 2.0 g/10min.

The MFR₂₁ for multimodal LLDPE should be in the range 5 to 150, preferably 10 to 100 g/10min, e.g. 15 to 60 g/10 min. The Mw of multimodal LLDPE should be in the range 150,000 to 300,000, preferably 200,000 to 270,000. The Mw/Mn for multimodal LLDPE should be in the range 10 to 30, e.g. 15 to 25.

The multimodal LLDPE may formed from ethylene along with at least one C₃₋₁₂ alpha-olefin comonomer, e.g. 1-butene, 1-hexene or 1-octene. Preferably, the multimodal LLDPE is a binary copolymer, i.e. the polymer contains ethylene and one comonomer, or is a terpolymer, i.e. the polymer contains ethylene and two comonomers. Preferably, the multimodal LLDPE comprises an ethylene hexene copolymer, ethylene octene copolymer or ethylene butene copolymer. The amount of comonomer present in the multimodal LLDPE is preferably 0.5 to 12 mol%, e.g. 2 to 10% mole relative to ethylene, especially 4 to 8% mole. Alternatively viewed comonomer contents present in the multimodal LLDPE may be 1.5 to 10 wt%, especially 2 to 8 wt% relative to ethylene.

In general, a multimodal LLDPE comprises at least a lower molecular weight component (LMW) and a higher molecular weight (HMW) component.

Usually, a LLDPE polymer comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, a polymer consisting of two fractions only is called "bimodal". The form of the molecular weight distribution curve, i.e. the appearance of the graph of the polymer weight fraction as function of its molecular weight, of a multimodal LLDPE will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal LLDPE there is by definition a lower molecular weight component (LMW) and a higher molecular weight component (HMW). The LMW component has a lower molecular weight than the higher molecular weight component. Preferably, in a multimodal LLDPE polymer of use in this invention at least one of the LMW and HMW components is a copolymer of ethylene. Further preferably, at least the HMW component is an ethylene copolymer. Further preferably, also the lower molecular weight (LMW) component may be an ethylene copolymer. Alternatively, if one of the components is a homopolymer, then LMW is the preferably the homopolymer.

The term "ethylene copolymer" is again used in this context to encompass polymers comprising repeat units deriving from ethylene and at least one other C3-12 alpha olefin monomer. Preferred copolymers are binary and comprise a single comonomer or are terpolymers and comprise two comonomers. In any copolymeric HMW component, at least 0.25 mol-%, preferably at least 0.5 mol-%, e.g. at least 1-mol%, such as up to 10 mol-% of repeat units derive from the comonomer. Ethylene forms the majority of the HMW component.

In contrast the term "ethylene homopolymer" as used herein is intended to encompass polymers which consist essentially of repeat units deriving from ethylene. Homopolymers may, for example, comprise at least 99.8 %, preferably at least 99.9 %, by weight of repeat units deriving from ethylene.

The multimodal LLDPE of the invention is preferably bimodal or trimodal.

The lower molecular weight component of the multimodal LLDPE preferably has a MFR₂ of at least 50, preferably at least 100 g/10min, preferably 110 to 3000 g/10min, e.g. 110 to 500 g/10min, especially 150 to 400 g/10min. The molecular weight of the low molecular weight component should preferably range from 20,000 to 50,000, e.g. 25,000 to 40,000.

The density of the lower molecular weight component may range from 930 to 980 kg/m³, e.g. 945 to 975 kg/m³ preferably 950 to 975 kg/m³, especially 960 to 975 kg/m³.

The lower molecular weight component should preferably form 30 to 70 wt%, e.g. 40 to 60% by weight of the multimodal LLDPE with the higher molecular weight component forming 70 to 30 wt%, e.g. 40 to 60% by weight.

The higher molecular weight component should have a lower MFR₂ and a lower density than the lower molecular weight component.

The higher molecular weight component should have an MFR₂ of less than 1 g/10 min, preferably less than 0.5 g/10 min, especially less than 0.2 g/10min, and a density of less than 915 kg/m³, e.g. less than 910 kg/m³, preferably less than 905 kg/m³. The Mw of the higher molecular weight component may range from 100,000 to 1,000,000, preferably 250,000 to 500,000.

Alternatively the multimodal LLDPE may comprise other polymer components, e.g. up to 10 % by weight of a well known polyethylene prepolymer (obtainable from a prepolymerisation step as well known in the art). In case of such prepolymer, the prepolymer component is comprised in one of LMW and HMW components, preferably LMW component, as defined above.

Multimodal LLDPE polymers may be prepared for example by two or more stage polymerization or by the use of two or more different polymerization catalysts in a one stage polymerization. It is also possible to employ a multi- or dualsite catalyst. It is important to ensure that the higher and lower molecular weight components are intimately mixed prior to extrusion. This is most advantageously achieved by using a multistage process or a dual site catalyst.

Preferably the multimodal LLDPE is produced in a two-stage polymerization using the same catalyst, e.g. a metallocene catalyst or a Ziegler-Natta catalyst. Thus, two slurry reactors or two gas phase reactors could be employed. Preferably however, the multimodal LLDPE is made using a slurry polymerization in a loop reactor followed by a gas phase polymerization in a gas phase reactor.

A loop reactor - gas phase reactor system is marketed by Borealis as a BORSTAR reactor system. Any multimodal LLDPE of use in the films of the invention is preferably formed in a two stage process comprising a first slurry loop polymerisation followed by gas phase polymerisation.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Where the higher molecular weight component is made second in a multistage polymerisation it is not possible to measure its properties directly. However, the skilled man is able to determine the density, MFR₂ etc of the higher molecular weight component using Kim McAuley's equations. Thus, both density and MFR₂ can be found using K. K. McAuley and J. F. McGregor: On-line Inference of Polymer Properties in an Industrial Polyethylene Reactor, AIChE Journal, June 1991, Vol. 37, No, 6, pages 825-835.

The density is calculated from McAuley's equation 37, where final density and density after the first reactor is known.

MFR₂ is calculated from McAuley's equation 25, where final MFR₂ and MFR₂ after the first reactor is calculated. The use of these equations to calculate polymer properties in multimodal polymers is common place.

The multimodal LLDPE may be made using conventional single site or Ziegler-Natta catalysis as is known in the art. The Ziegler Natta and single site catalyst used for making the desired component is not critical. Thus any catalyst including Ziegler Natta catalyst and single site catalyst (including well known metallocenes and non-metallocenes) are used.

The preparation of a metallocene catalyst can be carried out according or analogously to the methods known from the literature and is within skills of a person skilled in the field. Thus for the preparation see e.g. EP-A-129 368, WO-A-9856831, WO-A-0034341, EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130. WO2005/002744 describes a preferable catalyst and process for preparing a LLDPE component.

Preferably however, the multimodal LLDPE polymer composition is manufactured using Ziegler-Natta (ZN) catalysis. Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, EP 810235 and WO 99/51646. The catalysts disclosed in WO 95/35323 are especially useful as they are well suited in production of both a polyethylene having a high molecular weight and a polyethylene having a low molecular weight. Thus, especially preferably the transition metal component comprises a titanium halide, a magnesium alkoxy alkyl compound and an aluminium alkyl dihalide supported on an inorganic oxide carrier.

In one embodiment a catalyst of Ziegler Natta type, wherein the active components are dispersed and solidified within Mg-based support by the emulsion/solidification method adapted to PE catalyst, e.g. as disclosed in WO03/106510 of Borealis, e.g. according to the principles given in the claims thereof.

In another preferable embodiment, the catalyst is a non-silica supported catalyst, i.e. the active components are not supported to an external silica support. Preferably, the support material of the catalyst is a Mg-based support material. Examples of such preferred Ziegler-Natta catalysts are described in EP 0 810 235. Multimodal (e.g. bimodal) polymers can also be made by mechanical blending of the polymer in a known manner.

In a very preferable embodiment of the invention the polyethylene composition is produced using a ZN catalysts disclosed in EP 688794.

Conventional cocatalysts, supports/carriers, electron donors etc can be used. Many multimodal or bimodal LLDPE's are commercially available.

### Other components

The composition of the invention may also comprise other polymer components, e.g. further LDPE, mLLDPE or multimodal LLDPE components or HDPE polymers. Preferably however, no other polymer components are present, i.e. the composition consists essentially of the three components. The composition can however contain conventional additives such as antioxidants, UV stabilisers, acid scavengers, nucleating agents, anti-blocking agents as well as polymer processing agent (PPA). Preferably therefore, the composition consists essentially of the components (A) to (C), i.e. it contains these alone along with conventional polymer additives.

### Component Ratios

The amount of LDPE present may range from 1 to 50% wt, e.g. 3 to 40 wt%, preferably 5 to 35% by weight, preferably 10 to 30 wt%, especially 15 to 20 wt% of the composition.

The amount of mLLDPE present may range from 10 to 90% wt, e.g. 15 to 80 wt%, preferably 20 to 60% by weight, more preferably 25 to 50 wt%, especially 30 to 45 wt% of the composition.

The amount of multimodal LLDPE present may range from 10 to 90% wt, e.g. 15 to 80 wt%, preferably 20 to 60% by weight, more preferably 25 to 50 wt%, especially 30 to 45 wt% of the composition.

In a highly preferred embodiment, the amount of each LLDPE component used is the same in wt% terms, e.g. 38 to 42 wt%. The amount of LDPE used is especially preferably in the range 18 to 22 wt%. A 40:40:20 (mLLDPE: multimodal LLDPE:LDPE) split has proven the most effective embodiment.

### Film Formation and Properties

The composition of the invention has been found to allow the formation of films having an ideal balance of properties. They have excellent optical properties and mechanical properties and are readily processed. In particular, films exhibit low haze and hence high transparency, high dart impact strengths, high tear strengths and high stiffness. The films also possess good sealing properties, e.g. high seal strength and shrink properties. The films can therefore be used as shrink films. Moreover, during extrusion of the composition of the invention, excellent bubble stability and temperature stability are observed.

The low haze properties observed are especially surprising given the fact that a three component blend is used in the invention.

The films of the invention are preferably monolayer films or the composition of the invention is used to form a layer within a multilayer film. Any film of the invention may have a thickness of 10 to 250 µm, preferably 20 to 200 µm, e.g. 30 to 150 µm, such as e.g. 30 to 50 µm, preferably 80 to 135 µm.

As noted above, the films of the invention can be manufactured using simple in line addition of the polymer pellets to an extruder. For film formation using a polymer mixture it is important that the different polymer components be intimately mixed prior to extrusion and blowing of the film as otherwise there is a risk of inhomogeneities, e.g. gels, appearing in the film. Thus, it is especially preferred to thoroughly blend the components, for example using a twin screw extruder, preferably a counter-rotating extruder prior to extrusion and film blowing. Sufficient homogeneity can also be obtained by selecting the screw design for the film extruder such that it is designed for good mixing and homogenising.

The film of the invention can be blown or cast, preferably blown. Blown films will typically be produced by extrusion through an annular die, blowing into a tubular film by forming a bubble which is collapsed between nip rollers after solidification. This film can then be slit, cut or converted (e.g. gusseted) as desired. Conventional film production techniques may be used in this regard. Typically the composition will be extruded at a temperature in the range 160°C to 240°C, and cooled by blowing gas (generally air) at a temperature of 10 to 50°C to provide a frost line height of 1 or 2 to 8 times the diameter of the die. The blow up ratio should generally be in the range 1.5 to 4, e.g. 2 to 4, preferably 2.5 to 3.

The film of the invention can also be a cast film. The cast film process involves the extrusion of polymers melted through a slot or flat die to form a thin, molten sheet or film. This film is "pinned" to the surface of a chill roll (typically water-cooled and chrome-plated) by a blast of air from an air knife or vacuum box. The film quenches immediately and then has its edges slit prior to winding. Because of the fast quenching step, a cast film generally has better optical properties than a blown film and can be produced at higher line speeds.

The films of the invention exhibit high dart impact strengths and tear strengths, especially in the machine direction. In the passages which follow, certain parameters are given based on a specific film thickness. This is because variations in thickness of the film cause a change to the size of the parameter in question so to obtain a quantitative value, a specific film thickness is quoted. This does not mean that the invention does not cover other film thicknesses rather it means that when formulated at a given thickness, the film should have the given parameter value.

Thus for a 40 µm film of the invention, especially a monolayer film, more especially a monolayer film consisting essentially of components A) to C), Dart drop F50 (ISO 7765/1) may be at least 160 g, preferably at least 180 g, especially at least 200 g, most especially at least 210 g.

Elmendorf Tear resistances in the machine direction for a 40 µm film, especially a monolayer film, more especially a monolayer film consisting essentially of components A) to C), may be at least 1.5 N.

1% Secant modulus properties (ASTM D882) in the machine direction should be at least 210 MPa, especially at least 230 MPa.

The films exhibit excellent haze properties, e.g. less than 20%, preferably less than 15% (ASTM D1003),especially less than 10% for a 40 µm film, especially a monolayer film, more especially a monolayer film consisting essentially of components A) to C).

During film manufacture, it has also been noted that the composition has excellent bubble stability due to uniform melt distribution. This means the blend can be extruded successfully over a broad range of temperatures, in particular high temperatures. Thus, films of the invention, especially a monolayer film, more especially a monolayer film consisting essentially of components A) to C), can be sealed at temperatures of 130°C or greater. Moreover, the sealing window, i.e. the temperature over which a successful sealing operation can be carried out may be at least 35°C, more preferably at least 40°C, especially at least 45°C.

The films of the invention, e.g. monolayer films may be laminated on to barrier layers as is known in the art. For food and medical applications for example, it may be necessary to incorporate a barrier layer, i.e. a layer which is impermeable to water and oxygen, into the film structure. This can be achieved using conventional lamination techniques. Suitable barrier layers are known and include polyamide, ethylene vinyl alcohol, PET and metallised Al layers.

Viewed from another aspect therefore the invention provides a laminate comprising a film as hereinbefore defined laminated onto a barrier layer.

In such an embodiment it may be convenient to laminate the barrier layer onto two monolayer films as hereinbefore described thereby forming a 3 layer structure in which the barrier layer forms the middle layer.

The films of the invention have a wide variety of applications but are of particular interest in packaging of food and drink, consumer and industrial goods, medical devices and in heavy duty packaging. Specific applications include industrial liners, heavy duty shipping sacks, carrier bags, bread bags and freezer bags.

The invention will now be described further with reference to the following non-limiting examples:

### Analytical Tests

The following methods were used to measure the properties that are defined generally above and in examples below. The material and film samples used for the measurements and definitions were prepared as described under the particular method or in tables.

**Density** of the materials is measured according to ISO 1183:1987 (E), method D, with isopropanol-water as gradient liquid. The cooling rate of the plaques when crystallising the samples was 15 C/min. Conditioning time was 16 hours.

**Tensile modulus** (secant modulus, 0.05-1.05%) is measured according to ASTM D 882-A on 30 µm films. The speed of testing is 5mm/min. The test temperature is 23°C. Width of the film was 25 mm.

**MFR2/21** are measured according to ISO 1133 at 190°C at loads of 2.16 and 21.6 kg respectively.

**Haze** is measured according to ASTM D 1003

**Impact resistance** is determined on Dart-drop (g/50%). Dart-drop is measured using ISO 7765-1, method "A". A dart with a 38 mm diameter hemispherical head is dropped from a height of 0.66 m onto a film clamped over a hole. If the specimen fails, the weight of the dart is reduced and if it does not fail the weight is increased. At least 20 specimens are tested. The weight resulting in failure of 50% of the specimens is calculated.

**Tear resistance (determined as Elmendorf tear (N))**
The tear strength is measured using the ISO 6383/2 method. The force required to propagate tearing across a film specimen is measured using a pendulum device. The pendulum swings under gravity through an arc, tearing the specimen from pre-cut slit. The specimen is fixed on one side by the pendulum and on the other side by a stationary clamp. The tear strength is the force required to tear the specimen.

**Molecular weights and molecular weight distribution, Mn, Mw and MWD** were measured by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 µL of sample solution were injected per analysis. The column set was calibrated using universal calibration (according to ISO 16014-2:2003) with 15 narrow MWD polystyrene (PS) standards in the range of 1.0 kg/mol to 12 000 kg/mol. Mark Houwink constants were used for polystyrene and polyethylene (K: 9.54 x10⁻⁵ dL/g and a: 0.725 for PS, and K: 3.92 x10⁻⁴ dL/g and a: 0.725 for PE). All samples were prepared by dissolving 0.5 - 3.5 mg of polymer in 4 mL (at 140 °C) of stabilized TCB (same as mobile phase) and keeping for 3 hours at 140 °C and for another 1 hours at 160 °C with occasional shaking prior sampling in into the GPC instrument.

**Puncture resistance** (determined in Ball puncture (energy/J) at +23°C. The method is according to ASTM D 5748. Puncture properties (resistance, deformation, penetration energy) are determined by the resistance of film to the penetration of a probe (19 mm diameter) at a given speed (250mm/min). Test was made on film samples prepared as described under the **"Film Sample preparation"** and in tables with film thickness as given in Table 2 and 3.

### Example 1: preparation of bimodal LLDPE using Ziegler-Natta catalyst Example 1a (Preparation of the catalyst)

### Complex preparation:

87 kg of toluene was added into the reactor. Then 45.5 kg Bomag A in heptane was also added in the reactor. 161 kg 99.8 % 2-ethyl-1-hexanol was then introduced into the reactor at a flow rate of 24-40 kg/h. The molar ratio between BOMAG-A and 2-ethyl-1-hexanol was 1:1.83.

### Solid catalyst component preparation:

275 kg silica (ES747JR of Crossfield, having average particle size of 20 µm) activated at 600 °C in nitrogen was charged into a catalyst preparation reactor. Then, 411 kg 20 % EADC (2.0 mmol/g silica) diluted in 555 litres pentane was added into the reactor at ambient temperature during one hour. The temperature was then increased to 35 °C while stirring the treated silica for one hour. The silica was dried at 50 °C for 8.5 hours. Then 655 kg of the complex prepared as described above (2 mmol Mg/g silica) was added at 23 °C during ten minutes. 86 kg pentane was added into the reactor at 22 °C during ten minutes. The slurry was stirred for 8 hours at 50 °C. Finally, 52 kg TiCl₄ was added during 0.5 hours at 45 °C. The slurry was stirred at 40 °C for five hours. The catalyst was then dried by purging with nitrogen.

### Example 1b: polymerisation process

The ZN LLDPE used in the examples was produced in pilot plant multistage reaction comprising a prepolymerisation stage in slurry in a 50 dm³ loop reactor at 80°C in a pressure of 65 bar using the polymerisation catalyst prepared according to Example 1a and triethylaluminium cocatalyst. The molar ratio of aluminium of the cocatalyst to titanium of the catalyst was 20. Ethylene was fed in a ratio of (200g of C2)/(1g/catalyst). Propane was used as the diluent and hydrogen was fed in amount to adjust the MFR2 of the prepolymer to about 10 g/10 min. The obtained slurry was transferred into a 500 dm³ loop reactor, operated at 85 °C temperature and 60 bar pressure, was continuously introduced propane diluent, ethylene, hydrogen and 1-butene comonomer in such flow rates that ethylene content in the reaction mixture was 6.4 mol-%, the mole ratio of hydrogen to ethylene was 150 mol/kmol and the mole ratio of 1-butene to ethylene was 730 mol/kmol. The continuous feed of prepolymerised catalyst was adjusted in such quantities that ethylene polymer was produced at a rate of 28 kg/h. The polymer had an MFR₂ of 100 g/10 min and density of 946 kg/m³.

The polymer was withdrawn from the loop reactor by using settling legs, and the polymer slurry was introduced into a flash tank operated at 3 bar pressure and 20 °C temperature.

From the flash tank the polymer was introduced into a fluidised bed gas phase reactor, which was operated at 80 °C temperature and 20 bar pressure. Into the gas phase reactor were additional ethylene, hydrogen and 1-butene introduced, as well as nitrogen flushes to keep the connections and piping open. Consequently, the concentration of ethylene in the reactor gas was 20 mol-%, the molar ratio of hydrogen to ethylene was 4 mol/kmol and the molar ratio of 1-butene to ethylene was 580 mol/kmol. The polymer was withdrawn from the reactor at a rate of 67 kg/h. After collecting the polymer it was blended with conventional additives (stabiliser and polymer processing aid) and extruded into pellets in a counterrotating twin-screw extruder JSW CIM90P. The resulting multimodal znLLDPE had an MFR₂ of 0.2 g/10 min and density of 923 kg/m³. The split between the polymer produced in the loop reactor and the polymer produced in the gas phase reactor was 45/55.

### Example 2: Preparation of unimodal LLDPE using metallocene catalyst

The catalyst complex used in the polymerisation example was a silica supported bis(n-butyl cyclopentadienyl)hafnium dibenzyl, (n-BuCp)₂Hf(CH₂Ph)₂, and it was prepared according to "Catalyst Preparation Example 2" of WO2005/002744. The starting complex, bis(n-butyl cyclopentadienyl)hafnium dichloride, was prepared as described in "Catalyst Preparation Example 1" of said WO 2005/002744.

**Activated catalyst system:** Complex solution of 0.80 ml toluene, 38.2 mg (n-BuCp)₂Hf(CH₂Ph)₂ and 2.80 ml 30 wt% methylalumoxane in toluene (MAO, supplied by Albemarle) was prepared. Precontact time was 60 minutes. The resulting complex solution was added slowly onto 2.0 g activated silica (commercial silica carrier, XPO2485A, having an average particle size 20µm, supplier: Grace). Contact time was 2 h at 24°C. The catalyst was dried under nitrogen purge for 3 h at 50°C. The obtained catalyst had Al/Hf of 200 mol/mol; Hf 0.40 wt%.

The mLLDPE used in the below film examples was produced as follows:
An ethylene hexene resin was produced using the above bis(n-butylcyclopentadienyl) hafnium dibenzyl catalyst in a slurry loop reactor at the following conditions:

| | |
|---|---|
| Pressure | 42 bar |
| C2 amount | 4 wt% |
| C6/C2: | 0.35 |
| Temp. | 86°C |
| Residence time: | 40 to 60 mins |

After collecting the polymer it was blended with conventional additives (stabiliser and polymer processing aid) and extruded into pellets in a counterrotating twin-screw extruder JSW CIM90P. The obtained unimodal mLLDPE polymer had the density of 926 kg/m³ and MFR₂ of 1.3 g/10min.

### Example 3

The LDPE's used were commercial polymers. Numerous LDPE polymers are available from suppliers.

The following polymers, made using the techniques of Example 1 and 2 were employed in film blowing along with two commercial LDPE polymers.

**Table 1 Grade Properties**

| Grade | Density | MFR2 | MFR21 |
|---|---|---|---|
| A - Unimodal mLLDPE | 926 | 1.3 | |
| B - Bimodal LLDPE | 923 | 0.2 | 22 |
| C- LDPE | 924 | 0.75 | |
| D - LDPE | 922 | 1.2 | |

### Example 4

### Film Sample Preparation

General Procedure: Pellets of grades A, B and C above were obtained having particle sizes around 4 mm. 40%wt Grade A, 40%wt Grade B and 20wt% Grade C were blended in a film extruder. A film was extruded on a 70 mm extruder with die diameter 200 mm, at a blow up ratio of 3:1 frost line height 900 mm, Die gap 1,0 mm, Extruder temp setting: 180 - 200°C to form a 40 µm film.

The film samples used in the examples of the invention and in the test runs of the comparative examples as described below were prepared on a Reifenhauser film line
The blends of the various polymer pellets were prepared by an automatic mixing unit, and fed directly into the film extruder. Films were produced according to the below conditions.

### Comparative Examples

Comparative films made of various combinations of Grades A, B, C and D are also shown in the Table below to emphasize the advantageous properties of the invention.

**Table 2**

| Film No. | Grade A Wt% | Grade B Wt% | Grade D Wt% | Thickness µm | Dart Drop | Haze % |
|---|---|---|---|---|---|---|
| 1 | 40 | 40 | 20 (Grade C) | 40 | 215 | 12 |
| 2 | 40 | 40 | 20 | 80 | 460 | 14.9 |
| 3 | 40 | 40 | 20 | 100 | 610 | 17.5 |
| 4 | 60 | 20 | 20 | 80 | 660 | 11.4 |
| 5 | 60 | 20 | 20 | 100 | 720 | 14.3 |
| 6 | 60 | 20 | 20 | 40 | 250 | 8.5 |
| 7 | 40 | 30 | 30 | 40 | 220 | 8.8 |
| 8 | 40 | 40 | 20 | 70 | 360 | |
| 9 | 40 | 40 | 20 | 125 | 830 | |
| 10 | 30 | 50 | 20 | 40 | 240 | 13.5 |
| C1 | 30 | | 70 | 40 | 170 | 8.2 |
| C2 | 10 | | 90 | 40 | 130 | 9.4 |
| C3 | 50 | 50 | | 40 | 240 | 28.3 |
| C4 | 30 | 70 | | 40 | 250 | 61 |
| C5 | 10 | 90 | | 40 | 230 | 80.5 |
| C6 | | 90 | 10 | 40 | 160 | 40.4 |
| C7 | | 70 | 30 | 40 | 100 | 12.4 |
| C8 | | 50 | 50 | 40 | 110 | 12 |
| C9 | | 30 | 70 | 40 | 110 | 15.2 |
| C10 | | 10 | 90 | 40 | 100 | 14.8 |

Further properties of the formed films are shown in Tables 3 and 4.

**Table 3**

| **Film Properties** | | |
|---|---|---|
| **Film Properties Invention Film vs. Comparable Film (LDPE rich blend)** | Invention Film 1 | Comparative Film 2 |
| Dart Impact | 215 | 130 |
| Tear Resistance MD | 1.5 | 1.5 |
| Haze % | 12 | 9.4 |
| 1% sec mod MD (stiffness) | 260 | 200 |
| Process stability/bubble stability* | +++ | + |
| Temperature Stability* | +++ | + |

The film of the invention therefore possesses better dart impact, stiffness, bubble stability and temperature stability without detrimentally affecting the optical properties of the formed film making it a highly attractive film for the packager.

**Table 4**

| Film No. | A/B/D | Thickness mm | Dart drop (g) | MD tear Resi (N) | TD tear Res (N) | Heat seal T Temp/range | Haze % | Puncture res Max force (N) | Deformation Mm | Penetration energy (g) |
|---|---|---|---|---|---|---|---|---|---|---|
| 2 | 40/40/20 | 80 | 460 | 1.3 | 13.6 | | 14.9 | | | |
| 6 | 60/20/20 | 40 | 250 | 2.6 | 8.2 | 130/ >50 | 8.5 | 59 | 84 | 3.2 |
| 7 | 40/30/30 | 40 | 220 | 2.2 | 8.6 | 135/ >45 | 8.8 | 64 | 88 | 3.8 |
| 8 | 40/40/20 | 70 | 360 | | | | | | | |
| 9 | 40/40/20 | 125 | 830 | | | | | | | |
| 10 | 30/50/20 | 40 | 240 | 2.1 | 10.8 | 140/ >40 | 13.5 | 70 | 107 | 4.5 |
| C1 | 30/-/70 | 40 | 170 | 1.2 | 6.7 | | 8.2 | 62 | 63 | 2.5 |
| C2 | 10/-/90 | 40 | 130 | 3.2 | 3 | | 9.4 | 55 | 53 | 1.9 |
| C3 | 50/50/- | 40 | 240 | 2.4 | 8.1 | | 28.3 | 70 | 103 | 4.5 |
| C4 | 30/70/- | 40 | 250 | 2.1 | 10.5 | | 61 | 66 | 88 | 3.6 |
| C5 | 10/90/- | 40 | 230 | 2.5 | 12.1 | | 80.5 | 56 | 82 | 3.4 |
| C6 | -/90/10 | 40 | 160 | 1 | 16 | | 40.4 | 65 | 94 | 3.9 |
| C7 | -/70/30 | 40 | 100 | 0.7 | 14.2 | | 12.4 | 75 | 95 | 4.4 |
| C8 | -/50/50 | 40 | 110 | 0.5 | 10 | | 12 | 75 | 95 | 4.2 |
| C9 | -/30/70 | 40 | 110 | 0.8 | 6.1 | | 15.2 | 68 | 75 | 3 |
| C10 | -/10/90 | 40 | 100 | 2.9 | 3 | | 14.8 | 60 | 60 | 2.1 |

The films of the invention represent an excellent balance between haze, toughness, sealing properties and low deformation. Films not containing the components of the invention exhibit various limitations.

Films without LDPE are generally hazy and have high deformation. Films without the mLLDPE can also be hazy but possess very poor mechanical properties.

Films without the multimodal LLDPE have high deformation or low dart drop.

Significantly processing advantages as well as final film property advantages have been demonstrated with two or more components in monolayer blended films. In the optimized blends multimodal LLDPE will contribute with processing/ blown-film bubble stability, stiffness, toughness and antiblocking ( easy opening..) performance. Unimodal mLLDPE will contribute re. transparency, MD- tear resistance and hot-tack/ heat sealing. LDPE will contribute re. transparency, shrink and heat sealing range.

## Claims

1. A polymer composition in the form of pellets comprising:
(A) 10 to 90 wt% of an mLLDPE polymer having a density of less than 940 kg/m³_{;}
(B) 10 to 90 wt % of a multimodal LLDPE polymer having a density of less than 940 kg/m³;
(C) I to 50 wt% of a LDPE polymer.

2. A composition as claimed in claim 1 wherein the mLLDPE is unimodal.

3. A composition as claimed in claim 2 wherein the multimodal LLDPE is made using Ziegler-Natta catalysis.

4. A composition as claimed in claim 1 to 3 wherein comprising
(A) 15 to 65 wt% of an mLLDPE polymer having a density of less than 940 kg/m³;
(B) 15 to 65 wt % of a multimodal LLDPE polymer having a density of less than 940 kg/m³;
(C) 10 to 30 wt% of a LDPE polymer.

5. A composition as claimed in claim 1 to 4 wherein comprising
(A) 30 to 45 wt% of an mLLDPE polymer having a density of less than 940 kg/m³;
(B) 30 to 45 wt % of a multimodal LLDPE polymer having a density of less than 940 kg/m³;
(C) 10 to 30 wt% of a LDPE polymer.

6. A composition as claimed in any preceding claim wherein the mLLDPE is an ethylene hexene or ethylene butene copolymer.

7. A composition as claimed in any preceding claim wherein the LDPE has a density of 922 to 930 kg/m3.

8. A composition as claimed in any preceding claim wherein the multimodal LLDPE comprises an ethylene homopolymer component and an ethylene copolymer component.

9. A monolayer film comprising
(A) 10 to 90 wt% of an mLLDPE polymer having a density of less than 940 kg/m³;
(B) 10 to 90 wt % of a multimodal LLDPE polymer having a density of less than 940 kg/m³; and
(C) 1 to 50 wt% of a LDPE polymer.

10. A multilayer film in which at least one layer thereof comprises:
(A) 10 to 90 wt% of an mLLDPE polymer having a density of less than 940 kg/m³;
(B) 10 to 90 wt % of a multimodal LLDPE polymer having a density of less than 940 kg/m³; and
(C) 1 to 50 wt% of a LDPE polymer.

11. A film as claimed in claim 9 or 10 having a haze value of less than 12% for a 40µm film.

12. A film as claimed in claim 9 to 11 having a dart drop value of at least 200 g for a 40µm film.

13. A film as claimed in claim 9 to 12 being a cast film or blown film.

14. Use of a film as claimed in claims 9 to 13 in packaging.

15. An article packaged using a film as claimed in claims 9 to 13.

16. A process for the preparation of a film comprising blowing a composition as claimed in claims 1 to 8 into a film.

## Patentansprüche

1. Polymerzusammensetzung in Form von Granulat, umfassend:
(A) 10 bis 90 Gew.-% eines mLLDPE-Polymers mit einer Dichte von weniger als 940 kg/m³;
(B) 10 bis 90 Gew.-% eines multimodalen LLDPE-Polymers mit einer Dichte von weniger als 940 kg/m³;
(C) 1 bis 50 Gew.-% eines LDPE-Polymers.

2. Zusammensetzung nach Anspruch 1, wobei das mLLDPE unimodal ist.

3. Zusammensetzung nach Anspruch 2, wobei das multimodale LLDPE unter Anwendung der Ziegler-Natta-Katalyse erzeugt wurde.

4. Zusammensetzung nach den Ansprüchen 1 bis 3, umfassend:
(A) 15 bis 65 Gew.-% eines mLLDPE-Polymers mit einer Dichte von weniger als 940 kg/m³;
(B) 15 bis 65 Gew.-% eines multimodalen LLDPE-Polymers mit einer Dichte von weniger als 940 kg/m³;
(C) 10 bis 30 Gew.-% eines LDPE-Polymers.

5. Zusammensetzung nach den Ansprüchen 1 bis 4, umfassend:
(A) 30 bis 45 Gew.-% eines mLLDPE-Polymers mit einer Dichte von weniger als 940 kg/m³;
(B) 30 bis 45 Gew.-% eines multimodalen LLDPE-Polymers mit einer Dichte von weniger als 940 kg/m³;
(C) 10 bis 30 Gew.-% eines LDPE-Polymers.

6. Zusammensetzung nach einem der vorstehenden Ansprüche, wobei das mLLDPE ein Ethylen-Hexen- oder Ethylen-Buten-Copolymer ist.

7. Zusammensetzung nach einem der vorstehenden Ansprüche, wobei das LDPE eine Dichte von 922 bis 930 kg/m³ aufweist.

8. Zusammensetzung nach einem der vorstehenden Ansprüche, wobei das multimodale LLDPE eine Ethylenhomopolymer-Komponente und eine Ethylencopolymer-Komponente umfaßt.

9. Einschichtige Folie, umfassend:
(A) 10 bis 90 Gew.-% eines mLLDPE-Polymers mit einer Dichte von weniger als 940 kg/m³;
(B) 10 bis 90 Gew.-% eines multimodalen LLDPE-Polymers mit einer Dichte von weniger als 940 kg/m³;
(C) 1 bis 50 Gew.-% eines LDPE-Polymers.

10. Mehrschichtige Folie, bei der zumindest eine Schicht folgendes aufweist:
(A) 10 bis 90 Gew.-% eines mLLDPE-Polymers mit einer Dichte von weniger als 940 kg/m³;
(B) 10 bis 90 Gew.-% eines multimodalen LLDPE-Polymers mit einer Dichte von weniger als 940 kg/m³;
(C) 1 bis 50 Gew.-% eines LDPE-Polymers.

11. Folie nach Anspruch 9 oder 10 mit einem Trübungswert von weniger als 12 % für eine 40 µm Folie.

12. Folie nach den Ansprüchen 9 bis 11 mit einem Wert für einen fallenden Stift von mindestens 200 g für eine 40 µm Folie.

13. Folie nach den Ansprüchen 9 bis 12, die eine Gießfolie oder eine Blasfolie ist.

14. Verwendung einer Folie nach den Ansprüchen 9 bis 13 beim Verpacken.

15. Gegenstand, der unter Verwendung einer Folie nach den Ansprüchen 9 bis 13 verpackt wurde.

16. Verfahren zum Herstellen einer Folie, umfassend das Blasen einer Folie nach den Ansprüchen 1 bis 8 zu einer Folie.

## Revendications

1. Composition de polymère sous forme de granulés comprenant :
(A) de 10 à 90 % en poids d'un polymère mLLDPE possédant une densité inférieure à 940 kg/m³ ;
(B) de 10 à 90 % en poids d'un polymère LLDPE multimodal possédant une densité inférieure à 940 kg/m³ ;
(C) de 1 à 50 % en poids d'un polymère LDPE.

2. Composition selon la revendication 1, dans laquelle le mLLDPE est unimodal.

3. Composition selon la revendication 2, dans laquelle le LLDPE multimodal est préparé en utilisant une catalyse de Ziegler-Natta.

4. Composition selon l'une quelconque des revendications 1 à 3, comprenant :
(A) de 15 à 65 % en poids d'un polymère mLLDPE possédant une densité inférieure à 940 kg/m³ ;
(B) de 15 à 65 % en poids d'un polymère LLDPE multimodal possédant une densité inférieure à 940 kg/m³ ;
(C) de 10 à 30 % en poids d'un polymère LDPE.

5. Composition selon l'une quelconque des revendications 1 à 4, comprenant :
(A) de 30 à 45 % en poids d'un polymère mLLDPE possédant une densité inférieure à 940 kg/m³ ;
(B) de 30 à 45 % en poids d'un polymère LLDPE multimodal possédant une densité inférieure à 940 kg/m³ ;
(C) de 10 à 30 % en poids d'un polymère LDPE.

6. Composition selon l'une quelconque des revendications précédentes, dans laquelle le mLLDPE est un copolymère d'éthylène-hexène ou d'éthylène-butène.

7. Composition selon l'une quelconque des revendications précédentes, dans laquelle le LDPE possède une densité comprise dans la plage allant de 922 à 930 kg/m³.

8. Composition selon l'une quelconque des revendications précédentes, dans laquelle le LLDPE multimodal comprend un composant homopolymère d'éthylène et un composant copolymère d'éthylène.

9. Film monocouche comprenant :
A) de 10 à 90 % en poids d'un polymère mLLDPE possédant une densité inférieure à 940 kg/m³ ;
(B) de 10 à 90 % en poids d'un polymère LLDPE multimodal possédant une densité inférieure à 940 kg/m³ ;
(C) de 1 à 50 % en poids d'un polymère LDPE.

10. Film multicouche dans lequel au moins l'une des couches comprend :
A) de 10 à 90 % en poids d'un polymère mLLDPE possédant une densité inférieure à 940 kg/m³ ;
(B) de 10 à 90 % en poids d'un polymère LLDPE multimodal possédant une densité inférieure à 940 kg/m³ ;
(C) de 1 à 50 % en poids d'un polymère LDPE.

11. Film selon la revendication 9 ou 10, possédant une valeur de trouble inférieure à 12 % pour un film de 40 µm.

12. Film selon l'une quelconque des revendications 9 à 11, possédant une valeur de résistance au choc au mouton d'au moins 200 g pour un film de 40 µm.

13. Film selon l'une quelconque des revendications 9 à 12, qui est un film moulé ou un film soufflé.

14. Utilisation d'un film selon l'une quelconque des revendications 9 à 13 pour l'emballage.

15. Article emballé en utilisant un film selon l'une quelconque des revendications 9 à 13.

16. Procédé de préparation d'un film comprenant le soufflage d'une composition selon l'une quelconque des revendications 1 à 8 en un film.
